# EUROPEAN PATENT APPLICATION

(11) **EP 0 877 068 A2**
(43) Date of publication of application: **11.11.1998**
(21) Application number: 98303197.2
(22) Date of filing: 24.04.1998
(51) Int. Cl.: C09D 183/04, C08J 7/04

(54) **A primerless silicone hardcoat composition for plastic substrates, and related articles**

(30) Priority: 05.05.1997 US 850459
(71) Applicant: GENERAL ELECTRIC COMPANY, Schenectady, NY 12345 (US)
(72) Inventor: Patel, Gautam Ambalal, Clifton Park, New York 12065 (US); Browall, Warella Racela, Niskayuna, New York 12309 (US)
(74) Representative: Szary, Anne Catherine, Dr.

(57) **Abstract**

A primerless silicone, hardcoat composition is disclosed. It comprises, by weight:
(a) 100 parts of resin solution in the form of a silicone/silica dispersion having about 10% to about 50% by weight of solids, and comprising:
   (i) about 5% by weight to about 25% by weight of colloidal silica, wherein the average silica particle size is less than about 10 nm;
   (ii) about 95% by weight to about 75% by weight of a mixture of an organotrialkoxy silane and an organodialkoxy silane; and
(b) about 1 part to about 20 parts per hundred parts resin solids of an agent suitable for promoting adhesion between the hardcoat composition and a plastic substrate.

Another embodiment of this invention is directed to an article, comprising a thermoplastic substrate, upon which the primerless silicone hardcoat composition described herein is applied and cured. The hardcoat composition is exceptionally chip-resistant and impact-resistant, making it very useful for protecting parts which would otherwise be very susceptible to damage from stones and other flying objects.

## Description

### TECHNICAL FIELD

This invention relates generally to protective coatings for plastic substrates. More particularly, it relates to hardcoat compositions based in part on a dispersion of colloidal silica, along with a partial condensate of a silane-based composition.

### BACKGROUND OF THE INVENTION

Many different types of thermoplastic substrates are available commercially, and the choice of a particular material depends in large part on the properties it possesses. As an example, polycarbonates and acrylic materials such as poly(methyl methacrylate) are known to posses a very attractive combination of properties, such as clarity, high ductility and high heat deflection temperature, as well as dimensional stability. Since many of these materials are transparent, they are used as replacements for glass in many different applications. Thermoplastics like the polycarbonates have distinct advantages over many types of glass, such as being relatively lightweight and shatterproof.

However, there are also some disadvantages to using these types of materials. For example, many of the transparent thermoplastics easily scratch and abrade, thereby decreasing their transparency. They also exhibit relatively poor resistance to chemicals and solvents, and are susceptible to degradation by ultraviolet (UV) light. Yellowing and erosion of the substrate surface can then occur.

One notable method for protecting the thermoplastic substrate from becoming damaged involves the use of a protective coating. The coating often contains a silicon compound for improving abrasion resistance, and is usually thermally cured or cured by UV radiation. The coating material may also contain UV light-absorbing agents that decrease the incidence of yellowing, which could otherwise result from weathering.

An early example of a protective coating system is described in U.S. Patent 4,027,073 of H. Clark, in which the coating is based on a dispersion of colloidal silica in a lower aliphatic alcohol-water solution of the partial condensate of a silanol. Many other compositions based in part on the silica dispersion and various silanes were also developed. At one time, most of them required the use of a primer coating on the substrate, to increase adhesion of the subsequently applied protective coating. The primer coating was often acrylic-based, e.g., a polyacrylic resin in a solvent blend.

Further developments eliminated the need for a primer layer, usually by enhancing the adhesive characteristics of the protective coating itself to the substrate. For example, U.S. Patent 5,349,002 describes the use of a caprolactone-based polyester polyol as an adhesion promoter for a colloidal silica-filled organopolysiloxane hardcoat composition. U.S. Patent 5,411,807 also describes a primerless silicone-based hardcoat composition, which includes an acrylate or a methacrylate ester as an adhesion promoter.

While silicone hardcoat compositions protect the underlying substrate from degradation, demands are being made for even greater protection - especially as the substrates are employed in many more commercial applications. As an example, most hardcoat compositions presently in use are quite resistant to abrasion from conventional sources, as demonstrated in standard evaluations like the Taber abrasion test. However, the hardcoats are often susceptible to considerable damage from high impact sources, such as flying stones. The damage that stones and other objects can cause to paint finishes and other parts of an automobile, such as the polycarbonate lens of a headlight, is described by Ramamurthy et al. in Progress in Organic Coatings 25 (1994), pages 43-71. Thus, an increasing number of thermoplastic customers are demanding a higher standard of abrasion resistance, such as that demonstrated in a Gravelometer/chemical exposure test. In this type of test, stones are shot at high velocity onto a coated thermoplastic, which is then treated with one or more solvents or other chemicals. The part is then inspected for damage resulting from chipping or cracking, and chemical attack. Very often, hardcoats which meet a Taber abrasion standard do not meet a Gravelometer-type standard.

There are certainly a number of other important requirements for most silicone hardcoats. For example, when used on transparent substrates, the hardcoats must also remain substantially transparent after being subjected to abrasion. Moreover, the hardcoats often have to be very flexible, e.g., possessing very good strain-to-microcracking characteristics. They should also be substantially resistant to most chemicals and solvents. Furthermore, the coatings should adhere very well to the substrate, without the need for a primer layer. The coatings should also be resistant to UV degradation, and should be relatively easy to apply and cure.

### SUMMARY OF THE INVENTION

In response to the needs discussed above, the present invention has been conceived. In one embodiment, the invention is a primerless silicone hardcoat composition, comprising, by weight:
(a) 100 parts of resin solution in the form of a silicone/silica dispersion having about 10% to about 50% by weight of solids, and comprising:
   (i) about 5% by weight to about 25% by weight of colloidal silica, wherein the average silica particle size is less than about 10 nm;
   (ii) about 95% by weight to about 75% by weight of a silicone resin derived from a mixture of an organotrialkoxy silane and an organodialkoxy silane; and
(b) about 1 part to about 20 parts per hundred parts resin solids of an agent suitable for promoting adhesion between the hardcoat composition and a plastic substrate.

The various constituents are described herein in terms of as-formulated quantities, unless otherwise indicated.

Another embodiment of this invention is directed to an article, comprising a thermoplastic substrate, upon which the primerless silicone hardcoat composition described herein is applied and cured. The hardcoat composition is exceptionally chip-resistant and impact-resistant, making it very useful for protecting parts which would otherwise be very susceptible to damage from stones and other flying objects.

Other details regarding these embodiments will follow.

### DETAILED DESCRIPTION OF THE INVENTION

As mentioned above, one component of this invention is a mixture of an organotrialkoxy silane and an organodialkoxy silane. These materials are described, for example, in U.S. Patent 4,914,143 (G. Patel), which is incorporated herein by reference. Many of the organotrialkoxy silanes suitable for the present invention conform to the formula R'Si(OR)₃, while many of the suitable organodialkoxy silanes have the formula R'₂Si(OR)₂. In the case of the organotrialkoxy silanes, each R is independently selected from the group consisting of alkyl groups containing about 1-8 carbon atoms and aromatic groups containing about 6-20 carbon atoms, and each R' is independently selected from the group consisting of alkyl groups containing about 1-3 carbon atoms and aromatic groups containing about 6-13 carbon atoms. In the case of the organodialkoxy silanes, each R is independently an alkyl group containing about 1-8 carbon atoms, and each R' is independently an alkyl group containing about 1-3 carbon atoms. Examples of alkyl groups suitable for R and R' are methyl, ethyl, isopropyl, n-butyl, t-butyl, and the like. An example of a suitable aromatic group for R and R' (in the case of the organotrialkoxy silanes) is the phenyl group.

In preferred embodiments for either silane, R and R' are each alkyl groups containing about 1-3 carbon atoms, such as methyl, ethyl, or isopropyl. In especially preferred embodiments, the organotrialkoxy silane is selected from the group consisting of methyltrimethoxysilane and methyltriethoxysilane, while the organodialkoxy silane is selected from the group consisting of dimethyldimethoxysilane, dimethyldiethoxysilane, and diethyldiethoxysilane.

Silanes like those described herein are known in the art and described in a variety of references which also show how to 5 make such materials. U.S. Patents 3,986,997 (Clark); 4,027,073 (Clark); 4,159,206 ((Armbruster et al.); 4,500,669 (Ashlock et al.); and 4,624,870 (Anthony) are instructive in this regard. Each of these patents is incorporated herein by reference. Moreover, other texts are also informative in this regard, such as C. Eaborn's Organosilicon Compounds, Butterworths Scientific Publications, 1960, which is also incorporated herein by reference.

Examples of suitable mixtures of silanes for the present invention include methyltrimethoxysilane and dimethldimethoxysilane; methyltriethoxysilane and dimethyldiethoxysilane; and methyltrimethoxysilane with dimethyldiisopropoxysilane. In selecting the most appropriate mixture for a given application, various factors are considered, such as material cost, availability, and the desired properties. Frequently, a preferred mixture is a combination of methyltrimethoxysilane with dimethyldimethoxysilane.

The ratio of the organotrialkoxy silane to the organodialkoxy silane is usually in the range of about 95 : 5 to about 60 : 40, and preferably, in the range of about 85 : 15 to about 70 : 30. Higher levels of the organodialkoxy silane within these ranges are useful for enhancing the flexibility and impact resistance of the hardcoat composition, although they may also lower its abrasion resistance. Thus, adjustments in the silane ratio can readily be made to tailor the product to particular property specifications, based on the teachings herein.

The hardcoat composition of this invention further comprises about 5% by weight to about 25% by weight colloidal silica, based on 100 parts of resin solids. In preferred embodiments, the level of colloidal silica is in the range of about 10% by weight to about 15% by weight. The colloidal silica is usually in the form of an aqueous (e.g., water) dispersion, or an aqueous/organic solvent dispersion. The dispersion is usually stabilized with a volatile base.

The preparation and use of colloidal silica and colloidal silica dispersions is well-known in the art, and described, for example, in the following texts which are incorporated herein by reference: Kirk-Othmer Encyclopedia of Chemical Technology, Vol. 20, 3rd Edition; and the Colloid Chemistry of Silica and Silicates, R. Iler, Cornell University Press (1955). In general, the amount of colloidal silica employed is adjusted to achieve the optimal level of abrasion resistance, which is in part dependent on the surface area of the silica.

Some aqueous dispersions of colloidal silica which could be used for the present invention are described in the previously-referenced U.S. Patents 4,914,143 and 3,986,997, as well as in U.S. Patent 5,503,935 (Patel), also incorporated herein by reference. After its pH is initially adjusted, the dispersion is allowed to stand until the pH is stabilized at an appropriate level, e.g., about 3 to about 7.5. The compositions can then be aged to ensure formation of a partial condensate of the silanes and the dispersion. Other methods for preparing the dispersions of colloidal silica are also possible, e.g., as shown in U.S. Patent 4,177,315, incorporated herein by reference.

The colloidal silica for the present invention must have an average particle diameter less than about 10 nanometers (nm) (also referred to as "millimicrons"), as determined by transmission electron microscopy, followed by image analysis. In preferred embodiments, at least about 80% of the colloidal silica particles have a diameter in the range of about 6-9 nm, based on particle volume. The use of this smaller-size colloidal silica, in conjunction with the organodialkoxy silane, appears to greatly enhance the "thermoformability" characteristics of the hardcoat composition, as described in U.S. Patent 4,914,143. These characteristics (e.g., freedom from cracking after thermoforming at elevated temperatures) remain present, even when the range of organodialkoxy is varied, in contrast to the results evidenced when a larger particle size of colloidal silica is employed.

In preferred embodiments, component a(ii) comprises about 95% by weight to about 90% by weight of the mixture of silanes. Furthermore, component (a) itself (i.e., the combination of silica with the silane mixture) is usually about 10% to about 50% by weight solids, and preferably, about 15% to about 25% by weight solids.

The primerless silicone hardcoat compositions of the present invention usually require an agent for promoting adhesion to the substrate on which the hardcoat is to be applied. Most of the suitable adhesion promoters are described in the art. Examples include acrylate esters or methacrylate esters, as described in U.S. Patent 5,411,807, incorporated herein by reference. These types of materials are commercially available as Tone, monomers, from Union Carbide Coating Resins. Specific examples of preferred adhesion promoters of this type are caprolactone acrylate and caprolactone methacrylate. They are usually employed at a level of about 1 part to about 20 parts by weight, based on 100 parts by weight of the resin solids. In some preferred embodiments, they are employed at a level of about 3 parts to about 8 parts by weight.

Polyester polyols represent another family of adhesion promoters useful for the present invention. As an example, caprolactone-based polyester polyols are described in U.S. Patent 5,349,002, incorporated herein by reference. Many of these materials are difunctional and trifunctional, and are commercially available as Tone, Polyols, from Union Carbide. Exemplary grades include Tone 0200 diol, Tone 0301 triol, and Tone 0310 triol. Many other grades are available, based on variation in molecular weight, hydroxy number, melting point, viscosity, and the like. Alternative polyester polyols are the urethane modified- and silicone modified types. Usually, these types of adhesion promoters are also employed at a level of about 1 to 10 parts by weight, based on 100 parts by weight of the resin solids.

Another type of suitable adhesion promoter is an acrylated polyurethane or a methacrylated polyurethane. Such materials are generally discussed in U.S. Patent 5,503,935, incorporated herein by reference. They are often semi-solid or viscous materials which can be directly added to the silicone dispersion. The polyurethanes usually have a molecular weight in the range of about 400 to about 1500. Commercial examples of acrylated urethanes are Actilane CB-32, from SNPE Chimie Company of France, and Ebecryl 8804, from Radcure Specialties, Inc. of Louisville, Ky. Commercial examples of methacrylated urethanes are M-407, from Echo Resins & Laboratory. This material is an adduct of isophorone diisocyante and 2-hydroxyethylmethacrylate, and has a molecular weight of about 482. The acrylated and methacrylated polyurethanes are each usually employed at a level of about 1 to 15 parts by weight, based on 100 parts by weight of the resin solids.

Still another type of adhesion promoter which is suitable for the present invention is an acrylic copolymer having
reactive or interactive sites, and a molecular weight (number average) in the range of about 1000 to about 10,000. These materials (which are usually thermosetting) are also described in U.S. Patent 5,503,935. They can be added directly to the silicone dispersion. The reactive or interactive sites can be hydroxyl sites which provide a hydroxy number in the range of about 30 to about 160, an acid number of less than about 4, and a molecular weight (number average) of about 1000 to about 10,000. Some of these copolymers are described in the Encyclopedia of Polymer Science and Engineering, Mark et al., John Wiley & Sons, Vol. 4 (1986), pp. 374-375. They can be prepared by the free radical polymerization of various co-monomers. As described in Organic Polymer Chemistry, by K.J. Saunders (Chapman Hall, London, 1973), a variety of monomers can be used to achieve the appropriate combination of properties for the copolymers. In brief, monomers like acrylonitrile or methyl methacrylate typically confer hardness to the copolymer, while monomers like ethyl acrylate and 2-ethylhexyl acrylate confer flexibility. Moreover, monomers like dimethylaminoethylmethacrylate and acrylic acid usually provide suitable reactive sites for polymerization. In general, some of the preferred acrylic copolymers used as adhesion promoters contain amine, carboxylic acid, amide, epoxy, hydroxy, or acyloxy groups.

Commercial examples of preferred acrylic copolymers are the Joncryl^{TH} acrylic polyols of S.C. Johnson Wax Co., and the acryloid acrylic resins available from Rohm and Haas Company. As described in U.S. Patent 5,503,935, some of the suitable acrylic copolymers are based in part on hydroxyalkylacrylates which provide silanol reactive or interactive sites. Exemplary techniques for making acrylic copolymers suitable for this invention can be found in an article by Kamath et al., Journal of Coating Technology, Vol. 59, No. 746, March, 1987, pp. 51-56. The acrylic copolymers are usually employed at a level of about 1 to 15 parts by weight, based on 100 parts by weight of the resin solids.

The hardcoat compositions of the present invention can include a variety of other components in amounts effective for the intended function of the component. Examples of these components include cure catalysts (e.g., tetra-n-butyl ammonium acetate); free radical initiators, hindered amine light stabilizers, antioxidants, dyes, pigments, flow modifiers, leveling agents, and surface lubricants. Colloidal metal oxides could be present, e.g., antimony oxide, cerium oxide, aluminum oxide, or titanium dioxide.

Another component which is very useful for some embodiments of the present invention is an ultraviolet (UV) light stabilizer, sometimes referred to as a UV "absorber". Many of these materials can be supplied in the form of an organic solvent solution, if desired. Examples of useful UV absorbers are described in U.S. Patents 5,391,795; 4,914,143; 4,544,582 4,308,317; and 4,278,804, all incorporated herein by reference. (Mixtures of UV absorbers are also possible). Exemplary classes include hydroxybenzophenones, benzotriazoles, cyanoacrylates, benzylidene malonates, and triazines.

In some preferred embodiments, the UV absorber is one which is capable of co-reacting with either or both of the silanes being employed. Such materials are also described in the referenced U.S. Patent 4,914,143, as well as in U.S. Patents 4,680,232 and 4,374,674, which are both also incorporated herein by reference. Examples include silylated benzophenone-type materials, such as,4-[gamma-(trimethoxysilyl)propoxy]-2-hydroxy benzophenone and 4-[gamma-(triethoxysilyl)propoxy]-2-hydroxy benzophenone.

Those skilled in the art will be able to readily determine the most appropriate level of UV absorber for a particular coating system. Usually, about 4% to about 20% (excluding solvent and based on the total weight of the silanes) of UV absorber is employed, with a level of about 10% to about 15% often being preferred.

Techniques for preparing the hardcoat compositions of the present invention are known in the art and described in many of the references mentioned above. Generally, the silanes are premixed in the optional presence of a hydrolysis catalyst, followed by the addition of aqueous colloidal silica. The aqueous colloidal silica component can optionally include a portion of the organic solvent being used. Reaction temperatures during these steps are usually in the range of about 20°C to about 40°C. Moreover, about 4 to about 6 hours is usually required to hydrolyze the silanes, such that the initial two-phase mixture is converted to a single liquid phase in which the colloidal silica is uniformly dispersed. Hydrolysis is usually allowed to continue for about another 12 to 18 hours, for a total equilibration period of about 16 to 24 hours, although some variation in these periods is possible, such as by the addition of heat to reduce the total equilibrium period to about 3 to 8 hours.

If used, the UV absorber is usually added with the remainder of the organic solvent at the completion of hydrolysis. Most of the other additives can also be added at this time. In some embodiments, organodialkoxy silane can be withheld initially and then later added, if desired.

The chemistry involved during and after hydrolysis for this type of reaction is known in the art. In general, as hydrolysis generates hydroxyl substituents to form silanols from the silanes, a condensation reaction begins to form silicon-oxygen-silicon bonds, although complete condensation usually does not occur, as described in U.S. Patent 4,914,143. Thus, a portion of the composition is often referred to as a "partial condensate". In view of the fact that the entire reaction system is somewhat dynamic, it should be understood that the overall composition further comprises any reaction products of the individual components (although the various weight percentages provided herein are based on the composition as-formulated).

Additional steps in preparing the composition are also known in the art, e.g., adjustment of the solids level with solvent, and adjustment of the pH as desired.

As mentioned above, the present invention embraces articles prepared by applying the hardcoat composition to a substrate of interest. A variety of plastic substrates (thermoplastic or thermosetting) may be used for the present invention, depending on the end uses contemplated for the article. Non-limiting examples include polycarbonates, acrylics, polyphenylene ether-based substrates, polyesters, polysulfones, polyimides (e.g., polyetherimides), cellulose acetate, poly{diethylene glycol bis(allyl carbonate)}, acrylonitrile-butadiene-styrene (ABS) polymers, and the like, as well as blends or copolymers based in part or entirely on any of the foregoing.

Transparent, thermoplastic substrates are sometimes of special interest. Examples include acrylics such as poly(methyl methacrylate), and polycarbonates such as those based on bisphenol A. Polycarbonates generally are of considerable interest because of the combination of physical and mechanical properties they possess.

Methods for applying the hardcoat composition to the substrate are familiar to those of ordinary skill in the art. Illustrative techniques include spraying, dipping, roll, and flow coating, and the like. The coatings may then be cured by various methods, e.g., thermal curing, or curing by the use of infrared or microwave energy. During the termal curing step, polymerization, condensation and cross linking of partial condensates occurs to form the coating. The thickness of the coating will depend in large part on the end use contemplated for the article. Usually, the thickness (after curing) is in the range of about 1 micron to about 15 microns, and preferably, in the range of about 5 microns to about 10 microns.

Once the hardcoat has cured, it protects the substrate from substantially all damage due to flying, rock-like fragments, e.g., gravel, stone, and the like. As described in the following examples, an evaluation of the performance of such a hardcoat often involves treatment with organic solvents after exposure to the rock-like fragments.

### EXAMPLES

These examples are merely illustrative, and should not be construed to be any sort of limitation on the scope of the claimed invention.

For the purpose of this disclosure, the percentage of solids for the coating compositions is determined by weighing about 1-2 grams of a resin solution of all of the components in an aluminum dish, and then removing all of the volatile components by heating at 150°C for about 1 hour. The percentage of resin solids can be calculated as follows: (weight solids/weight resin solution) X 100.

Samples of silicone hardcoat compositions were prepared as described in U.S. Patents 4,914,143 and 4,990,376, the latter patent also being incorporated herein by reference. As shown in the table, Sample A contained both dimethyldimethoxysilane (about 2.6 wt %) and methyltrimethoxysilane, and was within the scope of the present invention. The colloidal silica for this sample had an average particle size of 5 nm. Sample A also included an adhesion promoter, and was used to prepare a primerless, impact-resistant coating. Samples B and C were comparative materials which did not include the dimethyldimethoxysilane, and which did include a larger-size type of colloidal silica.

Coating compositions A and B were applied to polycarbonate headlight lenses and cured for 30 minutes at 130°C, to produce primerless, single-layer coatings. Composition C was applied on a lens primed with an air-dry, wet-on-wet acrylic-based primer layer, and cured in similar fashion, to provide a two-layer coating.

Complete head lamp assemblies were made using the coated lenses, and were then evaluated according to a test, PSA-B257110, utilized by Bosch and Peugeot. The test involved first impacting the samples, using a gravelometer, and then spraying the samples with a solvent mixture consisting of 61.5% heptane, 12.5% toluene, 6.0% xylene, 12.5% trichloroethylene, and 7.5% tetrachloroethylene. The head lamp was illuminated and subjected to various loads to determine the failure load at which cracking or other coating failures occurred. The results are shown in Table 1.

**Table 1**

| Comparative Coating Compositions** | | | |
|---|---|---|---|
| | A | B* | C* |
| Methyltrimethoxysilane | 183 | 203 | 203 |
| Dimethyldimethoxysilane | 20 | - | - |
| | | | |
| Acetic Acid | 1.8 | 1.25 | 1.25 |
| | | | |
| Colloidal Silica - 5nm size^{a} | 136.8 | - | - |
| Colloidal Silica - 22nm size^{b} | - | 125.5 | 125.5 |
| Deionized Water | - | 41.5 | 41.5 |
| Isopropanol/n-butanol (1:1 by wt.) | 370 | 370 | 370 |
| | | | |
| [UV Absorber]^{c} | 39.0 | 36.0 | 36.0 |
| | | | |
| Surfactant^{d} | 0.38 | 0.60 | 0.60 |
| Catalyst^{e} | 1.20 | 1.05 | 1.05 |
| | | | |
| Adhesion Promoter^{f} | 7.8 | 7.8 | - |
| | | | |
| Gravelometer/Chemical | | | |
| Exposure Test^{g}, (gms. to fail) | 6000 | - | 4500 |
| "Hella" test (hours to fail) | >48 | 24 | 1 |

| | | | |
|---|---|---|---|
| * Comparative Examples | | | |
| ** All parts by weight, unless otherwise indicated | | | |
| a) Nalcoag 2326, 14.5% colloidal silica in H₂O; Nalco Chemical Co | | | |
| b) Ludox AS-40, 40% colloidal silica in H₂O, DuPont Co. | | | |
| c) 53% M-SHBP (4-gamma-(tri-(methoxy/ethoxy)silyl)propoxy]-2-hydroxy benzophenone, in methanol; methoxy/ethoxy ratio of about 85:15 | | | |
| d) Silwet L-720: Silicone polyether surfactant from Osi Specialties | | | |
| e) 42% TBAA (Tetra-n-butyl ammonium acetate) in water | | | |
| f) Acrylic copolymer from SC Johnson, Joncryl‰ 587; Number avg. MW: 5500, Tg = 40°C. | | | |
| g) PSA - B257110 | | | |

As shown in the table, the coating composition of the present invention (sample A) was very substantially improved over comparative sample C, based on the results of the gravelometer/chemical exposure test.

An additional test was also undertaken by Hella, FRG. It is referred to as the "Hella" test. Here, the coated lenses (as part of a head lamp assembly) were impacted with a gravelometer, and then washed with a windshield cleaner. The lamps are then illuminated, and observations are made regarding the time required for cracks to develop, or for other coating failures to occur, such as chipping, peeling, or delamination. Although results of the Hella test were not entirely reproducible, some observations appeared to be valid. In this test, sample A was found to be the most impact-resistant, showing no failures after 48 hours of testing. In contrast, the primerless, comparative sample B, which utilized a larger particle size colloidal silica and did not include the dimethyldimethoxysilane, failed after about 24 hours. Comparative sample C, which included a primer but omitted other key components of the present invention, failed after only about 1 hour.

While preferred embodiments have been set forth for the purpose of illustration, the foregoing description should not be deemed to be a limitation on the scope of the invention. Accordingly, various modifications, adaptations, and alternatives may occur to one skilled in the art without departing from the spirit and scope of the present invention.

All of the patents, articles, and texts mentioned above are incorporated herein by reference.

## Claims

1. A primerless silicone hardcoat composition, comprising, by weight:
(a) 100 parts of resin solution in the form of a silicone dispersion having about 10% to about 50% by weight of solids, and comprising:
(i) about 5% by weight to about 25% by weight of colloidal silica, wherein the average silica particle size is less than about 10 nm;
(ii) about 95% by weight to about 75% by weight of a silicone resin derived from a mixture of an organotrialkoxy silane and an organodialkoxy silane; and
(b) about 1 part to about 20 parts of an agent suitable for promoting adhesion between the hardcoat composition and a plastic substrate.

2. The hardcoat composition of claim 1, wherein the ratio of the organotrialkoxy silane to the organodialkoxy silane is in the range of about 95 : 5 to about 60 : 40.

3. The hardcoat composition of claim 1, wherein the organotrialkoxy silane has the formula R'Si(OR)₃, wherein R is selected from the group consisting of alkyl groups containing about 1-8 carbon atoms and aromatic groups containing about 6-20 carbon atoms, and each R' is selected from the group consisting of alkyl groups containing about 1-3 carbon atoms and aromatic groups containing about 6-13 carbon atoms.

4. The hardcoat composition of claim 1, wherein the organodialkoxy silane has the formula R'₂Si(OR)₂, wherein R is selected from the group consisting of alkyl groups containing about 1-8 carbon atoms, and each R' is selected from the group consisting of alkyl groups containing about 1-3 carbon atoms.

5. The hardcoat composition of claim 1, wherein the adhesion promoter of component (b) is selected from the group consisting of:
(I) acrylate esters or methacrylate esters;
(II) caprolactone-based polyester polyols;
(III) acrylated- or methacrylated-polyurethanes;
(IV) acrylic copolymers having reactive or interactive sites, and a molecular weight (number average) in the range of about 1000 to about 10,000.

6. The composition of claim 5, wherein component (I) is a caprolactone acrylate, component (II) is selected from the group consisting of polycaprolactone diols and polycaprolactone triols and the acrylated- or methacrylated polyurethanes of component (III) have a molecular weight in the range of about 400 to about 1500.

7. The composition of claim 1, further comprising at least one ultraviolet light absorbing agent.

8. An article, comprising:
(A) a thermoplastic substrate; and
(B) a primerless silicone hardcoat composition, comprising, by weight:
(a) 100 parts of resin solution in the form of a silicone/silica dispersion having about 10% to about 50% by weight of solids, and comprising:
(i) about 5% by weight to about 25% by weight of colloidal silica, wherein the average silica particle size is less than about 10 nm;
(ii) about 95% by weight to about 75% by weight of a silicone resin derived from a mixture of an organotrialkoxy silane and an organodialkoxy silane; and
(b) about 1 part to about 20 parts per hundred parts resin solids of an agent suitable for promoting adhesion between the hardcoat composition and a plastic substrate.

9. A thermoplastic substrate covered by a cured, primerless hardcoat composition, wherein the hardcoat composition comprises, by weight:
(a) 100 parts of resin solution in the form of a silicone/silica dispersion having about 10% to about 50% by weight of solids, and comprising:
(i) about 5% by weight to about 25% by weight of colloidal silica, wherein the average silica particle size is less than about 10 nm;
(ii) about 95% by weight to about 75% by weight of a silicone resin derived from a mixture of an organotrialkoxy silane and an organodialkoxy silane; and
(b) about 1 part to about 20 parts per hundred parts resin solids of an agent suitable for promoting adhesion between the hardcoat composition and the substrate,
wherein the hardcoat protects the substrate from substantially all damage when the coated substrate is first exposed to flying, rock-like fragments, and then contacted with a mixture of organic solvents.

10. The invention of claim 9, wherein the substrate is polycarbonate-based.
